# FASCICULE DE BREVET EUROPEEN

(11) **EP 2 578 842 B1**
(45) Date de publication et mention de la délivrance du brevet: **06.04.2016**
(21) Numéro de dépôt: 12306183.0
(22) Date de dépôt: 28.09.2012
(51) Int. Cl.: F02C 7/047, F02C 7/045, B64D 33/02, B64D 15/04, F02C 7/04

(54) **Nacelle d'aéronef comportant un dispositif d'alimentation en air chaud d'un panneau combinant les traitements acoustique et du givre**
Triebwerksgondel mit einer Heißluftzuführungsvorrichtung zu einem Paneel, welches sowohl der Geräuschsdämmung als auch dem Schutz vor Vereisung dient
Aircraft nacelle comprising a device for supplying hot air to a panel combining acoustic and ice treatments

(30) Priorité: 03.10.2011 FR 1158895
(43) Date de publication de la demande: 10.04.2013
(73) Titulaire: Airbus Opérations SAS, 31060 Toulouse (FR)
(72) Inventeur: Porte, Alain, 31770 Colomiers (FR); Chelin, Frédéric, 32430 Encausse (FR); Galletti, Pascal, 31400 Toulouse (FR)
(74) Mandataire: Fantin, Laurent

(56) Documents cités:
- FR-A1- 2 917 067
- FR-A1- 2 941 675
- FR-A1- 2 952 032
- US-A- 3 933 327

## Description

La présente invention se rapporte à une nacelle d'aéronef comportant un dispositif d'alimentation en air chaud d'un panneau combinant les traitements acoustique et du givre.

Un ensemble propulsif d'aéronef comprend une nacelle dans laquelle est disposée de manière sensiblement concentrique une motorisation.

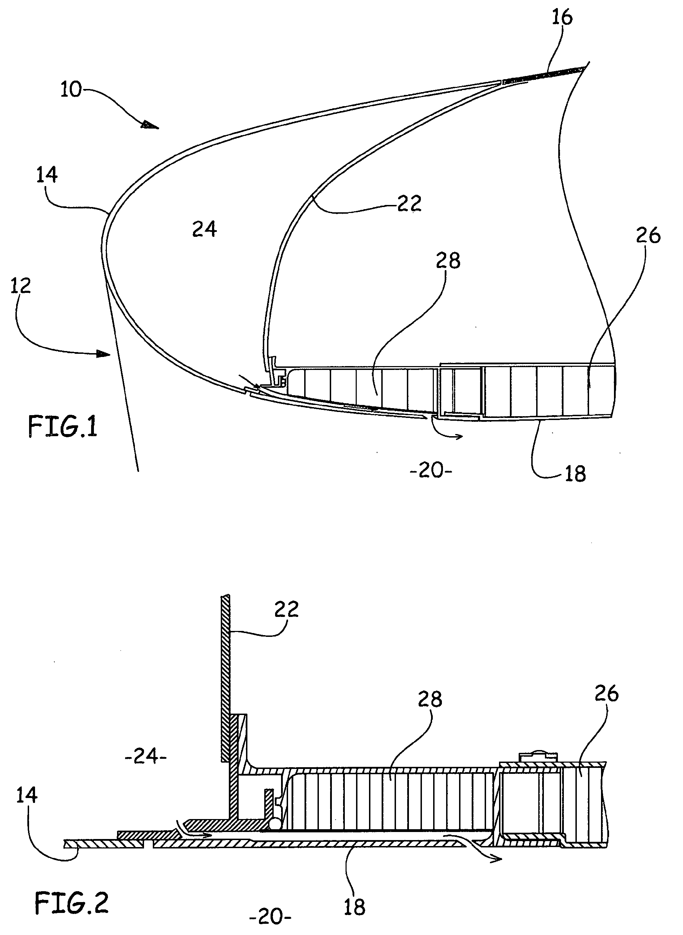

Comme illustré sur la figure 1, une nacelle 10 comprend à l'avant une entrée d'air 12 permettant de canaliser un flux d'air en direction de la motorisation. Selon une coupe longitudinale (contenant l'axe de rotation de la motorisation), une entrée d'air 12 comprend une lèvre 14 prolongée à l'extérieur de la nacelle par une paroi extérieure 16 et à l'intérieur par la paroi intérieure 18 définissant un conduit intérieur 20 permettant de canaliser l'air en direction de la motorisation.

La nacelle comprend également un cadre avant 22 qui délimite avec la lèvre 14 un conduit annulaire 24 qui peut être utilisé pour canaliser de l'air chaud pour le traitement du givre.

Pour limiter l'impact des nuisances sonores, des techniques ont été développées pour réduire le bruit interne, notamment en disposant, au niveau des parois du conduit intérieur 20, des panneaux ou revêtements visant à absorber une partie de l'énergie sonore, notamment en utilisant le principe des résonateurs d'Helmholtz.

Pour optimiser le traitement acoustique, ces panneaux doivent recouvrir la plus grande surface. Certains panneaux 26 pour le traitement acoustique peuvent recouvrir le conduit intérieur 20, ces derniers distants du cadre avant ne comportant pas la fonction du traitement du givre. D'autres peuvent être disposés dans le conduit annulaire 24 à l'avant du cadre 22 et combiner les fonctions du traitement acoustique et du traitement du givre. Enfin, un panneau 28 pour le traitement acoustique avec des matériaux résistants à la chaleur peut être intercalé entre le cadre avant 22 et les panneaux 26. Ce panneau 28 intègre également la fonction du traitement du givre et comprend des moyens pour capter l'air chaud dans le conduit annulaire 24 et le rejeter à l'arrière dans le conduit intérieur 20.

Un tel panneau combinant les fonctions du traitement acoustique et du traitement du givre est notamment décrit dans le brevet FR-2.917.067. Il comprend de l'extérieur vers l'intérieur une couche acoustiquement résistive, au moins une structure alvéolaire et une couche réflectrice, ainsi que des canaux délimités chacun par une paroi intercalée entre la couche acoustiquement résistive et la structure alvéolaire.

Cette solution permet de limiter les risques de communication entre l'intérieur des canaux et les cellules de la structure alvéolaire, et donc les risques de perturbation du traitement acoustique.

Selon un autre avantage, l'air chaud occupe un volume nettement inférieur par rapport aux solutions antérieures selon lesquelles il occupe le volume de certaines cellules de la structure alvéolaire, ce qui permet d'obtenir d'une part une meilleure concentration de l'air chaud contre la paroi à dégivrer renforçant l'efficacité du dégivrage, et d'autre part, une pression pneumatique plus élevée limitant le risque d'une pression à l'intérieur de la structure inférieure à celle de l'extérieur et donc la pénétration de l'air extérieur à l'intérieur du système de dégivrage.

Selon un autre avantage, l'air chaud est en contact permanent avec la peau à dégivrer, ce qui permet d'améliorer les échanges et de réduire la température de l'air chaud refoulé en sortie du système de dégivrage, ce qui permet de le rejeter sans risque de brûlures de la paroi traversée, notamment lorsque cette dernière est réalisée en un matériau sensible à la chaleur tel que le composite. En général chaque canal prévu pour canaliser l'air chaud communique à une première extrémité avec le conduit annulaire et débouche via un orifice de sortie dans le conduit intérieur 20. Ces canaux s'étendent selon la direction longitudinale et sont répartis sur toute la circonférence du conduit intérieur 20. Au niveau du conduit annulaire 24, l'air chaud est injecté généralement en un point de la circonférence et circule dans le conduit annulaire, en y faisant plusieurs tours. Des moyens sont prévus pour homogénéiser la température de l'air à l'intérieur du conduit annulaire. Pour assurer le transfert de l'air chaud depuis le conduit annulaire vers les canaux, il est nécessaire de prévoir une pièce intercalaire avec des canaux pour permettre de canaliser l'air chaud depuis le conduit annulaire vers les canaux du panneau acoustique. Comme les canaux du traitement acoustique, les canaux de cette pièce intercalaire sont orientés selon la direction longitudinale, soit perpendiculairement au flux d'air chaud circulant dans le conduit annulaire. Cet agencement ne permet pas d'optimiser l'écoulement de l'air chaud depuis le conduit annulaire vers les canaux du panneau acoustique. Aussi, la présente invention vise à pallier les inconvénients de l'art antérieur en proposant une nacelle équipée d'un dispositif d'alimentation en air chaud d'un panneau combinant les fonctions de traitement acoustique et de traitement du givre qui optimise l'écoulement de l'air chaud en direction dudit panneau.

A cet effet, l'invention a pour objet une nacelle d'aéronef comprenant une lèvre prolongée par un conduit intérieur formant une entrée d'air, un cadre avant délimitant avec ladite lèvre un conduit annulaire dans lequel circule de l'air chaud ainsi qu'un panneau pour le traitement acoustique comportant de l'extérieur vers l'intérieur une couche acoustiquement résistive, au moins une structure alvéolaire et une couche réflectrice ainsi que des canaux permettant de canaliser de l'air chaud, au moins un conduit avec une embouchure qui débouche dans le conduit annulaire étant prévu pour acheminer l'air chaud jusqu'au panneau pour le traitement acoustique, caractérisée en ce que l'embouchure permet de canaliser l'air chaud selon une direction qui forme un angle β inférieur à 60° avec la direction d'écoulement de l'air chaud dans le conduit annulaire.

D'autres caractéristiques et avantages ressortiront de la description qui va suivre de l'invention, description donnée à titre d'exemple uniquement, en regard des dessins annexés sur lesquels :
- la figure 1 est une coupe longitudinale d'une partie d'une entrée d'air selon l'art antérieur,
- la figure 2 est une coupe illustrant en détails un panneau pour le traitement acoustique selon l'art antérieur,
- la figure 3 est une coupe d'une partie d'une entrée d'air selon l'invention,
- la figure 4A est une coupe longitudinale selon un premier plan de coupe d'un panneau pour le traitement acoustique selon l'invention,
- la figure 4B est une coupe longitudinale selon un deuxième plan de coupe d'un panneau pour le traitement acoustique selon l'invention,
- la figure 5 est une coupe transversale selon un premier plan de coupe d'un panneau pour le traitement acoustique selon l'invention,
- la figure 6 est une coupe transversale selon un deuxième plan de coupe d'un panneau pour le traitement acoustique selon l'invention,
- la figure 7A est une coupe longitudinale illustrant en détails une chambre de stabilisation disposée à l'arrière du panneau pour le traitement acoustique selon l'invention,
- la figure 7B est un schéma illustrant la répartition selon la circonférence des canaux d'air chaud et des sorties du panneau pour le traitement acoustique selon l'invention,
- la figure 8 est une coupe longitudinale illustrant en détails un mode de réalisation d'une chambre de stabilisation prévue à l'avant d'un panneau pour le traitement acoustique,
- la figure 9 est une coupe transversale d'un mode de réalisation des entrées des canaux d'un panneau pour le traitement acoustique de l'invention,
- la figure 10 est une vue depuis l'intérieur du conduit annulaire d'un autre mode de réalisation des entrées des canaux d'un panneau pour le traitement acoustique de l'invention,
- la figure 11 est une coupe transversale du mode de réalisation illustré sur la figure 10,
- la figure 12 est une coupe longitudinale d'un autre mode de réalisation des entrées des canaux d'un panneau pour le traitement acoustique de l'invention,
- la figure 13 est une coupe selon la circonférence des entrées des canaux illustrées sur la figure 12, et
- la figure 14 est une coupe selon la circonférence d'une variante du mode de réalisation illustré sur la figure 13.

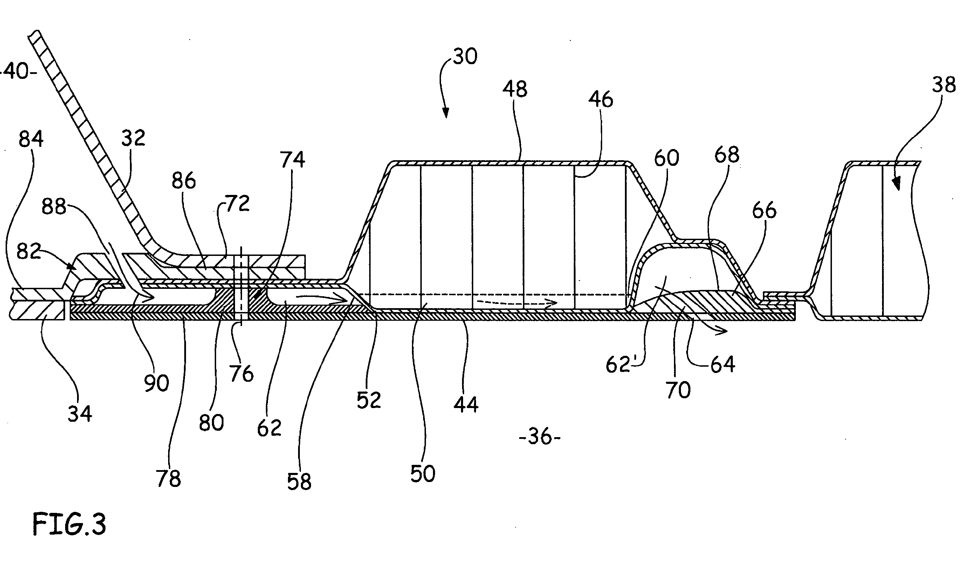

Sur la figure 3, on a illustré un panneau 30 pour le traitement acoustique disposé à l'arrière d'un cadre avant 32 d'une entrée d'air dont une partie de la lèvre 34 et l'avant du conduit intérieur 36 sont représentés. Avantageusement, à l'arrière du panneau 30, le conduit intérieur 36 est délimité par un panneau pour le traitement acoustique 38 sans traitement du givre généralement en matériau composite.

Pour la suite de la description, un plan longitudinal est un plan contenant l'axe longitudinal correspondant approximativement à l'axe de rotation de la motorisation. Un plan transversal est un plan perpendiculaire à l'axe longitudinal. De plus, l'avant du panneau 30 correspond à la partie du panneau orientée vers la lèvre alors que l'arrière du panneau 30 correspond à la partie orientée vers la sortie de la nacelle.

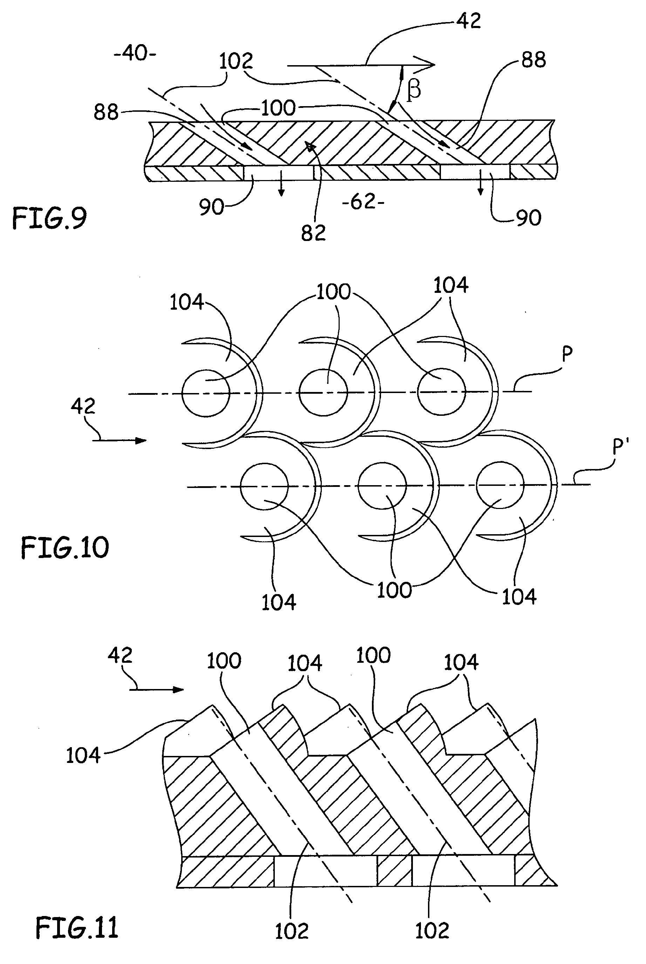

Selon l'invention, pour assurer le traitement du givre, de l'air chaud est injecté dans un conduit annulaire 40 délimité par la lèvre 34 et le cadre avant 32. L'air chaud s'écoule dans le conduit annulaire en effectuant approximativement un mouvement de rotation autour de l'axe longitudinal, selon un sens matérialisé par les flèches 42 sur les figures 9, 10, 11, 13 et 14.

Pour la suite de la description, le panneau pour le traitement acoustique 38, le cadre avant, la lèvre, les moyens pour injecter l'air chaud dans le conduit annulaire ne sont pas plus détaillés car ils sont connus de l'homme du métier.

De manière connue, le panneau pour le traitement acoustique 30 comprend de l'extérieur vers l'intérieur une couche acoustiquement résistive 44, au moins une structure alvéolaire 46 et une couche réflectrice 48 et des canaux 50 qui s'étendent depuis l'avant du panneau jusqu'à l'arrière du panneau. Avantageusement, les canaux 50 sont délimités par au moins une paroi intercalée entre la couche acoustiquement résistive 44 et la structure alvéolaire 46.

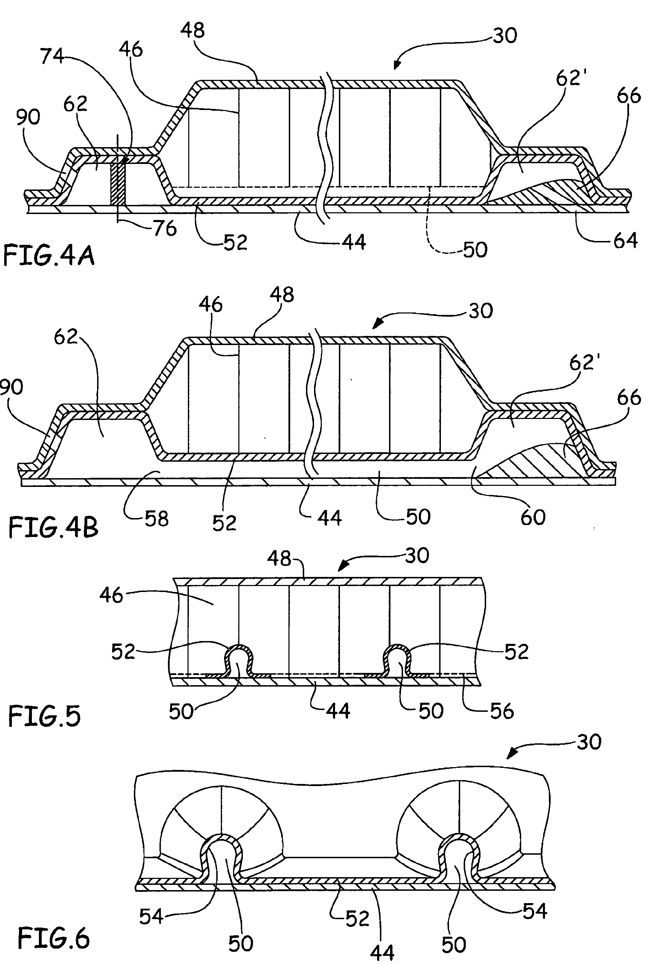

Selon un mode de réalisation, les canaux 50 sont réalisés comme décrits dans le document FR-2.917.067. Néanmoins, l'invention n'est pas limitée au mode de réalisation illustré dans ce document. Ainsi, une paroi 52 peut être mise en forme avec des sillons 54 de manière à délimiter une fois plaquée contre la couche acoustiquement résistive 44 les canaux 50. Cette paroi 52 peut comprendre des évidements 56 entre les canaux 50 pour réduire l'épaisseur de matière traverser par les ondes acoustiques, comme illustré sur la figure 5.

La mise en forme de la paroi 52, l'assemblage de la couche acoustiquement résistive 44 et de la paroi 52, le mode de réalisation des évidements 56 et l'assemblage de la structure alvéolaire et de la couche réflectrice ne sont pas plus détaillés car différentes solutions techniques peuvent être envisagées. Selon un mode de réalisation, les canaux 50 s'étendent approximativement selon la direction longitudinale. En variante, les canaux 50 pourraient avoir une forme d'hélice.

Chaque canal 50 comprend une entrée 58 reliée au conduit annulaire 40 et une sortie 60 reliée au conduit intérieur 36.

Selon l'invention, le panneau comprend en amont des canaux 50 un canal annulaire 62 qui s'étend sur au moins une partie de la circonférence de la nacelle, au moins un conduit assurant la communication entre ledit canal annulaire 62 et le conduit annulaire 40 en amont et plusieurs canaux 50 débouchant dans ledit canal annulaire 62 en aval. Le fait de prévoir un canal annulaire permet de simplifier la conception dans la mesure où le ou les conduits qui communiquent avec le conduit annulaire 40 ne sont pas nécessairement alignés avec les canaux 50.

De préférence, les entrées 58 et/ou les sorties 60 des canaux 50 débouchent dans la ou les canaux annulaires 62, 62' avec une forme évasée. Avantageusement, le canal annulaire 62 s'étend sur toute la périphérie de la nacelle.

De préférence, ledit canal annulaire a une section supérieure à celle des canaux 50 de manière à homogénéiser le traitement du givre sur la circonférence du conduit intérieur 36.

Pour assurer un brassage satisfaisant et réduire les disparités de température et/ou de pression le long de la circonférence, le conduit annulaire 62, également appelé chambre de stabilisation, a une section supérieure ou égale à 1,5 fois la section d'un canal 50. De préférence, le canal annulaire 62 a une hauteur supérieure ou égale au double de la hauteur d'un canal 50. De préférence, le canal annulaire a une section trapézoïdale dans un plan longitudinal, la grande base étant orientée vers la couche acoustiquement résistive 44.

Avantageusement, le canal annulaire 62 comprend plusieurs entrées reliées au conduit annulaire 40 et plusieurs sorties reliées aux canaux 50 et les entrées et les sorties ne sont pas alignées selon la direction longitudinale mais décalées selon la circonférence. Cet agencement contribue à obtenir un meilleur brassage de l'air chaud et à homogénéiser sa température et sa pression avant qu'il ne traverse les canaux 50.

De préférence, on peut prévoir un canal annulaire 62 en amont des canaux 50 et/ou un canal annulaire 62' en aval des canaux 50.

Selon un mode de réalisation, chaque canal annulaire 62, 62' est délimité par une paroi et la couche acoustiquement résistive 44.

Avantageusement, les canaux annulaires 62, 62' et les canaux 50 sont délimités par la même paroi 52. Cette paroi est mise en forme par tous moyens appropriés, notamment par formage.

Selon un mode de réalisation, la paroi 52 est en contact avec la couche acoustiquement résistive 44 en amont du canal annulaire 62 disposé en amont des canaux 50 et en aval du canal annulaire 62' disposé en aval des canaux 50. En complément, la couche réflectrice 48 est plaquée contre la paroi 52 au niveau des canaux annulaires 62, 62'.

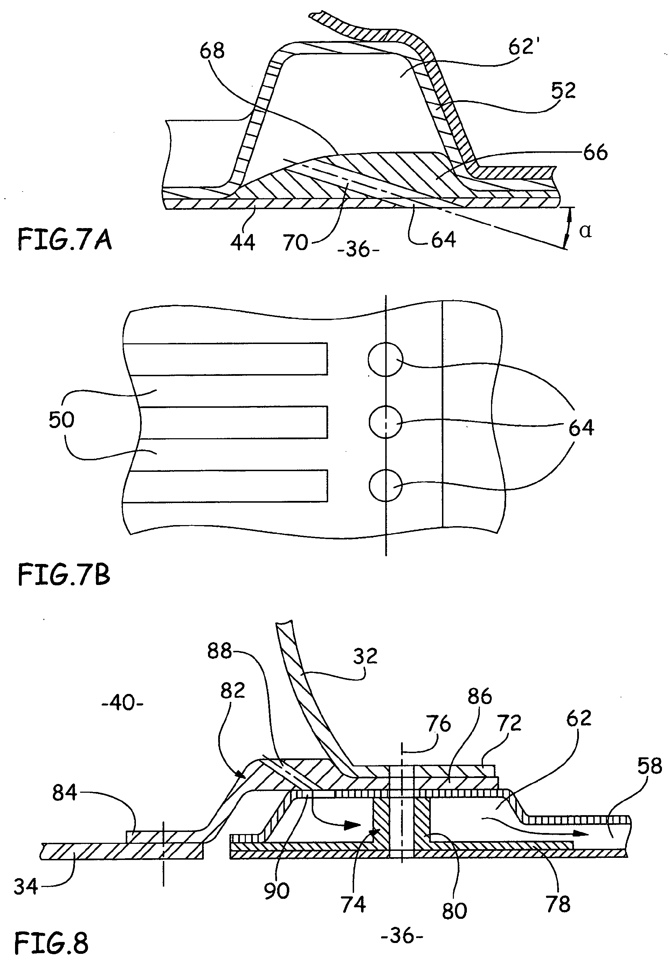

Au niveau du canal annulaire 62' prévu en aval des canaux 50, la couche acoustiquement résistive 44 comprend des orifices 64. Comme illustré sur la figure 7B, pour assurer une meilleure homogénéisation de la température, les orifices de sortie 64 ne sont pas alignés avec les canaux 50 mais décalés. De préférence, un orifice de sortie 64 est disposé entre deux zones situées dans le prolongement de canaux adjacents.

Avantageusement, le canal annulaire 62' comprend des moyens pour permettre d'incliner le flux d'air sortant des orifices de sortie 64 et limiter ainsi les perturbations du flux d'air circulant dans le conduit intérieur 36. A cet effet, le panneau comprend une cale 66 plaquée contre la surface intérieure de la couche acoustiquement résistive 44 et dont la surface supérieure 68 délimite avec la paroi 52 du canal annulaire 62' et qui comprend pour chaque orifice de sortie 64 un conduit 70 permettant de faire communiquer le canal annulaire 62' avec l'orifice de sortie 64 correspondant. Avantageusement, chaque conduit 70 forme un angle a inférieur à 50° avec la surface extérieure de la couche acoustiquement résistive située après l'orifice de sortie correspondant.

Pour faciliter l'écoulement de l'air, la surface supérieur 68 de la cale 66 comprend en amont une forme en biseau au niveau de laquelle débouchent les conduits 70.

Pour simplifier le circuit d'air et réduire au maximum les surfaces non traitées sur le plan acoustique, le panneau acoustique selon l'invention est relié au cadre avant au niveau du canal annulaire 62.

A cet effet, le cadre avant 32 comprend un bord 72 recourbé vers l'arrière plaqué conte la surface intérieure de la couche réflectrice 48, elle-même plaquée contre la paroi 52 au droit du canal annulaire 62 disposé en amont des canaux 50. Pour limiter les risque d'écrasement du canal annulaire 62, au moins une cale 74 est disposée dans le canal annulaire 62 au droit de chaque moyen 76 assurant la liaison entre le cadre avant 32 et le panneau pour le traitement acoustique 30 selon l'invention. Dans un plan transversal, les cales 74 sont espacées le long de la circonférence de manière à permettre le passage de l'air chaud entre le conduit annulaire 40 et les canaux 50.

Selon un mode de réalisation simplifié, chaque cale 74 se présente sous la forme d'un tube dont l'axe est aligné avec celui du moyen de liaison 76, sa hauteur étant égale à la hauteur du canal annulaire 62.

En variante, pour simplifier l'assemblage, le panneau peut comprendre au niveau du canal annulaire 62 disposé en amont des canaux 50 une bande de matière 78 qui s'étend sur au moins une partie de la circonférence, plaquée contre la couche acoustiquement résistive 44 et comportant pour chaque moyen de liaison 76 un bossage 80 sous forme d'un cylindre creux assurant la fonction de cale 74. Ainsi, selon ce mode de réalisation, plusieurs cales 74 sont reliées par la bande de matière 78.

De préférence, le panneau pour le traitement acoustique 30 est relié à la paroi délimitant la lèvre 34.

A cet effet, une pièce annulaire 82 assure la liaison entre d'une part la paroi délimitant la lèvre 34, et d'autre part, le panneau acoustique 30 et avantageusement le cadre avant 32.

Selon les cas, la pièce annulaire 82 peut être d'un seul tenant et s'étendre sur toute la périphérie de la nacelle ou être obtenue à partir d'un assemblage de plusieurs secteurs angulaires.

Selon un mode de réalisation illustré notamment sur la figure 8, la pièce annulaire 82 comprend à une première extrémité une première partie 84 sous forme d'une bande annulaire plaquée et fixée contre la surface intérieure de la paroi formant la lèvre 34, et à l'autre extrémité, une seconde partie 86 sous forme d'une bande intercalée entre le bord recourbé 72 du cadre avant 32 et la paroi délimitant le canal annulaire 62 du panneau acoustique 30, la seconde partie 86 étant décalée radialement vers l'extérieur par rapport à la première partie 84 de manière à ce que la surface extérieure du panneau acoustique 30 soit dans le prolongement de la surface extérieure de la paroi délimitant la lèvre 34.

Cette pièce annulaire 82 comprend plusieurs conduits 88 permettant de faire communiquer le conduit annulaire 40 avec les entrées 90 du canal annulaire 62 situé en amont du panneau acoustique 30.

Quel que soit le panneau pour le traitement acoustique 30, l'entrée d'air comprend au moins un conduit permettant de canaliser l'air chaud depuis le conduit annulaire 40 jusqu'au panneau pour le traitement acoustique 30.

Selon une première variante, illustré sur les figures 8 à 11, la pièce annulaire 82 précédemment décrite comprend des conduits 88.

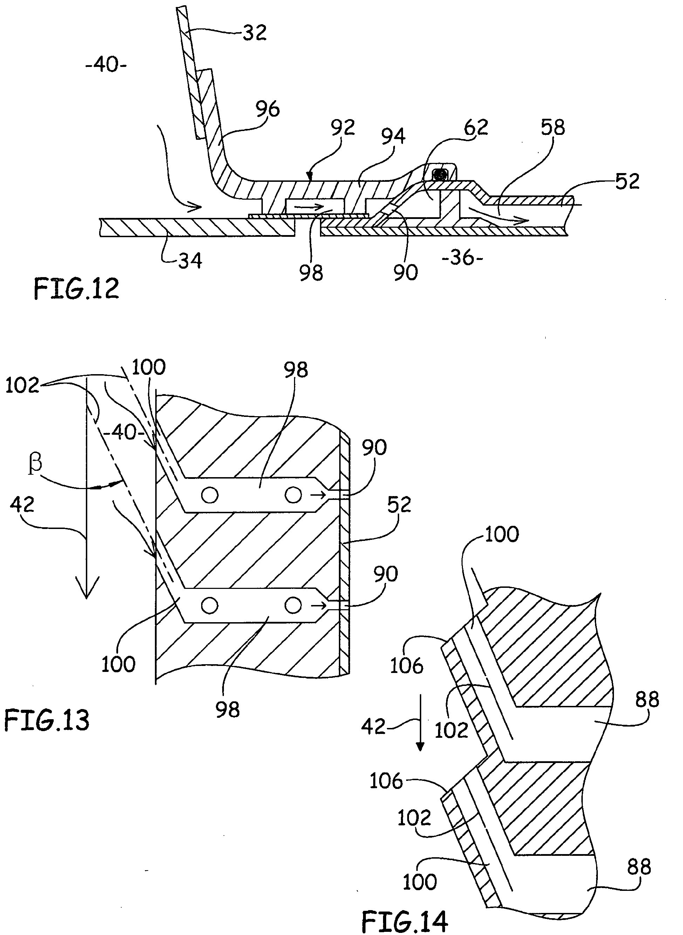

Selon une autre variante, illustrée sur les figures 12 et 14, une pièce intercalaire 92 peut assurer la jonction entre le cadre avant 32, la paroi délimitant la lèvre 34 et le panneau acoustique 30. Cette pièce intercalaire 92 comprend un corps annulaire 94 avec à l'avant une plaque recourbée 96 susceptible d'être plaquée et fixée contre la face arrière du cadre avant 32. Selon cette variante, la paroi délimitant la lèvre 34 et l'extrémité avant du panneau acoustique sont plaquées et fixées à la face intérieure (celle orientée vers l'axe longitudinal de la nacelle) par tous moyens appropriés. Le corps annulaire 94 comprend au niveau de sa face intérieure des formes en creux qui délimitent des conduits 98.

Cependant, l'invention n'est pas limitée à ces deux variantes pour les conduits susceptibles d'acheminer l'air chaud depuis le conduit annulaire vers le panneau pour le traitement acoustique. Ainsi, d'autres formes de conduits ou d'autres solutions pour délimiter un conduit pourraient être envisagées.

Chaque conduit d'alimentation 88 et 98 comprend une portion dite embouchure 100 qui débouche dans le conduit annulaire 40.

Selon l'invention, l'embouchure 100 permet de canaliser l'air chaud selon une direction référencée 102 qui forme un angle β inférieur à 60° avec la direction 42 d'écoulement de l'air chaud dans le conduit annulaire. Cet agencement assure de capter un plus grand débit d'air chaud.

Selon des variantes illustrées notamment sur les figures 9 à 11, les conduits 88 ont une embouchure 100 dont la direction 102 est contenue dans un plan perpendiculaire à l'axe longitudinal de la nacelle.

Selon une première variante illustrée sur la figure 9, les embouchures 100 sont disposées dans un même plan transversal.

Selon une autre variante illustrée sur les figures 10 et 11, les embouchures 100 sont disposées dans au moins deux plans transversaux P, P'. De préférence, les embouchures 100 sont réparties sur deux plans P, P' et disposées en quinconce. Selon un mode de réalisation préférentiel, les embouchures 100 débouchent au niveau de surfaces 104 sécantes avec la direction 42 d'écoulement de l'air chaud dans le conduit annulaire. Avantageusement, les surfaces 104 sont perpendiculaires à la direction 102 des conduits.

Selon d'autres variantes illustrées notamment sur les figures 13 et 14, les conduits 88 et 98 ont une embouchure 100 dont la direction 102 est sécante avec le plan perpendiculaire à l'axe longitudinal de la nacelle et sensiblement tangente à la circonférence du conduit interne de la nacelle. Dans ce cas, les embouchures 100 sont disposées au niveau de la surface intérieure de la paroi délimitant la lèvre 34. Selon un mode de réalisation, pour former les conduits, une pièce est plaquée contre la face intérieure de la paroi délimitant la lèvre 34, ladite pièce comportant des rainures qui délimitent chacune un conduit. La paroi délimitant la lèvre 34 étant courbe, une composante de la direction 102 de l'embouchure 100 des conduits est orientée vers l'axe longitudinale de la nacelle. Selon un mode de réalisation illustré sur la figure 13, les embouchures 100 sont disposées dans un plan parallèle à la direction 42 d'écoulement de l'air chaud dans le conduit annulaire.

Selon un autre mode de réalisation illustré sur la figure 14, les embouchures 100 débouchent au niveau de surfaces 106 sécantes avec la direction 42 d'écoulement de l'air chaud dans le conduit annulaire. Avantageusement, les surfaces 106 sont perpendiculaires à la direction 102 des conduits.

## Revendications

1. Nacelle d'aéronef comprenant une lèvre (34) prolongée par un conduit intérieur (36) formant une entrée d'air, un cadre avant (32) délimitant avec ladite lèvre (34) un conduit annulaire (40) dans lequel circule de l'air chaud ainsi qu'un panneau pour le traitement acoustique comportant de l'extérieur vers l'intérieur une couche acoustiquement résistive (44), au moins une structure alvéolaire (46) et une couche réflectrice (48) ainsi que des canaux (50) permettant de canaliser de l'air chaud, au moins un conduit (88, 98) avec une embouchure (100) qui débouche dans le conduit annulaire (40) étant prévu pour acheminer l'air chaud jusqu'au panneau pour le traitement acoustique (30), **caractérisée en ce que** l'embouchure (100) canalise l'air chaud selon une direction (102) qui forme un angle β inférieur à 60° avec la direction (42) d'écoulement de l'air chaud dans le conduit annulaire (40).

2. Nacelle d'aéronef selon la revendication 1, **caractérisée en ce que** la direction (102) est contenue dans un plan perpendiculaire à l'axe longitudinal de la nacelle.

3. Nacelle d'aéronef selon la revendication 2, **caractérisée en ce que** les embouchures (100) sont décalées vers l'avant par rapport au cadre avant (32).

4. Nacelle d'aéronef selon la revendication 1, **caractérisée en ce que** les conduits (98) sont accolés à la surface intérieure de la paroi délimitant la lèvre (34).

5. Nacelle d'aéronef selon la revendication 4, **caractérisée en ce qu'**elle comprend une pièce (92) plaquée contre la face intérieure de la paroi délimitant la lèvre (34), ladite pièce comportant des rainures qui délimitent chacune un conduit.

6. Nacelle d'aéronef selon l'une quelconque des revendications 1 à 5, **caractérisée en ce que** les embouchures (100) sont disposées dans plusieurs plans (P, P').

7. Nacelle d'aéronef selon la revendication 6, **caractérisée en ce que** les embouchures (100) sont disposées en quinconce.

8. Nacelle d'aéronef selon l'une quelconque des revendications précédentes, **caractérisée en ce que** les embouchures (100) débouchent au niveau de surfaces (104, 106) sécantes avec la direction (42) d'écoulement de l'air chaud dans le conduit annulaire.

9. Nacelle d'aéronef selon la revendication 8, **caractérisée en ce que** les surfaces (104, 106) sont perpendiculaires à la direction (102).

10. Nacelle d'aéronef selon l'une quelconque des revendications 1 à 9, **caractérisée en ce qu'**elle comprend une pièce (82, 92) qui assure la jonction entre le cadre avant (32), le panneau pour le traitement acoustique (30) et la paroi délimitant la lèvre (34) avec au moins un conduit (88, 98) prévu pour acheminer l'air chaud depuis le conduit annulaire (40) jusqu'au panneau pour le traitement acoustique (30).

## Patentansprüche

1. Gondel eines Luftfahrzeugs mit einem Wulst (34), der durch einen inneren Kanal (36) verlängert ist, der einen Lufteinlass bildet, mit einem vorderen Rahmen (32), der mit dem Wulst (34) eine ringförmige Leitung (40) begrenzt, in der Warmluft strömt, und mit einer Platte für die Schallbehandlung, die von außen nach innen eine schalldämpfende Schicht (44), wenigstens eine Kammerstruktur (46) und eine reflektierende Schicht (48) ebenso wie Kanäle (50) umfasst, die es gestatten, Warmluft zu kanalisieren, wobei wenigstens eine Leitung (88, 98) mit einer Mündung (100), die in die ringförmige Leitung (40) mündet, dazu vorgesehen ist, Warmluft bis zur Platte für die Schallbehandlung (30) zu führen, **dadurch gekennzeichnet, dass** die Mündung (100) die Warmluft in eine Richtung (102) kanalisiert, die einen Winkel β kleiner 60° mit der Strömungsrichtung (42) der Warmluft in der ringförmigen Leitung (40) einnimmt.

2. Gondel eines Luftfahrzeugs nach Anspruch 1, **dadurch gekennzeichnet, dass** die Richtung (102) in einer Ebene liegt, die im rechten Winkel zur Längsachse der Gondel ausgerichtet ist.

3. Gondel eines Luftfahrzeugs nach Anspruch 2, **dadurch gekennzeichnet, dass** die Mündungen (100) bezüglich dem vorderen Rahmen (32) nach vorne versetzt sind.

4. Gondel eines Luftfahrzeugs nach Anspruch 1, **dadurch gekennzeichnet, dass** die Leitungen (98) an die innere Oberfläche der Wand angefügt sind, die den Wulst (34) begrenzt.

5. Gondel eines Luftfahrzeugs nach Anspruch 4, **dadurch gekennzeichnet, dass** diese ein Stück (92) aufweist, das an die Innenseite der Wand angesetzt ist, die den Wulst (34) begrenzt, wobei das Stück Nuten aufweist, die jeweils eine Leitung begrenzen.

6. Gondel eines Luftfahrzeugs nach einem der Ansprüche 1 bis 5, **dadurch gekennzeichnet, dass** die Mündungen (100) in mehreren Ebenen (P, P') angeordnet sind.

7. Gondel eines Luftfahrzeugs nach Anspruch 6, **dadurch gekennzeichnet, dass** die Mündungen (100) gegeneinander versetzt sind.

8. Gondel eines Luftfahrzeugs nach einem der vorhergehenden Ansprüche, **dadurch gekennzeichnet, dass** die Mündungen (100) im Bereich von Oberflächen (104, 106) münden, die sich mit der Strömungsrichtung (42) der Warmluft in der ringförmigen Leitung schneiden.

9. Gondel eines Luftfahrzeugs nach Anspruch 8, **dadurch gekennzeichnet, dass** die Oberflächen (104, 106) im rechten Winkel zur Richtung (102) ausgerichtet sind.

10. Gondel eines Luftfahrzeugs nach einem der Ansprüche 1 bis 9, **dadurch gekennzeichnet, dass** diese ein Stück (82, 92) aufweist, das die Verbindung zwischen dem vorderen Rahmen (32), der Platte für die Schallbehandlung (30) und der den Wulst (34) begrenzenden Wand gewährleistet und das wenigstens eine Leitung (88, 98) aufweist, die dazu vorgesehen ist, Warmluft von der ringförmigen Leitung (40) bis zur Platte für die Schallbehandlung (30) zu führen.

## Claims

1. Aircraft nacelle comprising a lip (34) extended by an inner conduit (36) forming an air intake, a front frame (32) delimiting with said lip (34) annular channel (40) within which hot air circulates and a panel for acoustic treatment comprising, from outside inwardly, an acoustic resistive layer (44), at least one honeycomb structure (46) and one reflective layer (48) as well as ducts (50) for channeling hot air, at least one conduit (88, 98) with an opening (100) which opens into the annular channel (40) being provided for carrying hot air up to the panel for acoustic treatment (30), **characterized in that** the opening (100) channels hot air in a direction (102) which forms an angle β of less than 60° with hot air flow direction (42) into annular channel (40).

2. Aircraft nacelle according to claim 1, wherein direction (102) is contained in a plane perpendicular to the longitudinal axis of the nacelle.

3. Aircraft nacelle according to claim 2, wherein openings (100) are offset forwardly with respect to front frame (32).

4. Aircraft nacelle according to claim 1, wherein conduits (98) are pressed against the inner surface of the wall defining lip (34).

5. Aircraft nacelle according to claim 4, wherein it comprises a part (92) pressed against the inner face of the wall defining lip (34), said part having grooves with each groove defining a conduit.

6. Aircraft nacelle according to anyone of claims 1 to 5, wherein openings (100) are arranged in several planes (P, P').

7. Aircraft nacelle according to claim 6, wherein openings (100) are staggered.

8. Aircraft nacelle according to anyone of the preceding claims, wherein openings (100) open on surfaces (104, 106) intersecting with direction (42) of the hot air flow in the annular channel.

9. Aircraft nacelle according to claim 8, wherein surfaces (104, 106) are perpendicular to direction (102).

10. Aircraft nacelle according to anyone of claims 1 to 9, wherein it comprises part (82, 92) which ensures the connection between the front frame (32), the panel for sound processing (30), and the wall defining lip (34) with at least one conduit (88, 98) provided for carrying hot air from the annular channel (40) to the panel for acoustic treatment (30).
